Europäisches Patentamt

(19) European Patent Office

Office européen des brevets

(11) Publication number: **0 331 601**
**A2**

(12) # EUROPEAN PATENT APPLICATION

(21) Application number: 89500025.5

(51) Int. Cl.⁴: **F 03 D 3/06**

(22) Date of filing: 02.03.89

(30) Priority: 02.03.88 ES 8800619
23.12.88 ES 8803942

(43) Date of publication of application:
06.09.89 Bulletin 89/36

(84) Designated Contracting States:
AT BE CH DE FR GB GR IT LI LU NL SE

(71) Applicant: Munoz Saiz, Manuel
San Emilio, 16
E-28037 Madrid (ES)

(72) Inventor: Munoz Saiz, Manuel
San Emilio, 16
E-28037 Madrid (ES)

(74) Representative: Pons Arino, Angel
Pons Patentes y Marcas, S.L. Paseo de la Castellana,
164, 1 piso
E-28046 Madrid (ES)

(54) **Wind generator.**

(57) Wind generator comprised of a rotating shaft along which are mounted two or more equidistant radial sails, each of which sails is comprised of a piece of supporting mesh and a series of flexible, self-orienting strips attached along one of their longitudinal edges to the sail -framework of which they are a part. The strips are placed alongside or close to the mesh and hold the same relative position in all sails, such that when the wind strikes the sails from the mesh side, the -strips rise without resisting the wind, while when the wind strikes the side bearing the strips, the strips press against the mesh, --resisting the passage of the wind.

EP 0 331 601 A2

## Description

## WIND GENERATOR

The invention referred to herein is a simple wind generator which allows greater use to be made of wind action.

Wind generators are used as motors in electricity production, water lifting, and an infinite number of industrial processes.

Traditional wind generators are comprised of arms or blades mounted on a rotor moved by the effect of wind on the blades. Such blades must be adjustable to different wind strengths and directions and require complicated orientation mechanisms which make said generators complex and very expensive to manufacture as well as to maintain. In addition, their output is relatively low.

The invention described herein is a wind generator of a simple, economical composition which can also use different wind strengths, even should winds be quite slight, making installation of this generator feasible in areas having low winds. This invention also has a longer period of operation.

One advantage of this generator is its large wind-catching surface, which allows it to make use of any wind, regardless of its direction, without the need for complex orientation mechanisms.

Due to its large wind-catching surface, this invention has a strong starting power and high output.

Another advantage offered by this generator is its system of self-protection against high-strength winds.

Maintenance and repairs are low-cost items, due to the nature of the generator's parts.

This generator is composed of a rotating shaft along which two or more radial sails are mounted at equidistant angles. Each sail is comprised of a piece of supporting mesh and a series of self-orienting, flexible strips. On one end of the aforementioned shaft is a geared ring that enmeshes with a power supply pinion.

Each piece of mesh is mounted on a flat framework having the same shape as the sails. Similarly, the flexible strips of each sail are mounted on a flat framework independent of the mesh-bearing framework. The strips are layered consecutively on the framework so as to cover its entire surface. These strips are attached to the framework along only one of their edges, for example, by means of a rotating shaft.

The frameworks bearing the flexible strips are located alongside or close to the frameworks bearing the mesh and are located on the same side of said mesh on each sail.

Thus, when the wind strikes the sails on the mesh side, it forces the flexible strips to separate from the mesh, since the strips are not held down on the other side, and the wind has no effect on the generator. On the other hand, when the wind strikes the sails on the strip side, the strips press against the mesh, forming flat surfaces which the wind strikes, turning the shaft on which the sails are mounted.

The rotating shaft may be vertical or horizontal, and is comprised of either a rigid, rotating bar to which the frameworks bearing the mesh and the strips are attached, or a tubular, rotating shaft mounted on a rigid, fixed shaft. The rotating shaft could also be comprised of a set of freely-rotating bearings or rings mounted on a rigid bar, with the frameworks bearing the mesh and strips attached to said bearings or rings.

In each sail, the mesh-bearing framework may be moved at an angle to the strip-bearing framework, and the two frameworks are attached to each other by elastic or motorized elements that regulate the separation between them according to wind strength or intensity. Thus, when the wind striking the strip side is very strong, it can force the framework bearing the mesh to separate, making the strips turn and decreasing or eliminating the wind-resistant surface.

The sails may be triangular, rectangular, trapezial, etc. The strips should preferibly be quadrangular (for example, rectangular or trapezial) and the upper horizontal edge of each strip is attached to the framework. The strips may also be set at a slant.

The center area of the mesh of each sail may be left slightly slack, giving a certain concavity to the fabric and increasing output.

On the ends of the shaft, the generator can have flat, transversal, locking surfaces that would increase generator output. The strips forming the sails should preferibly be made of fabric. The flat frameworks bearing the strips include at least one rigid arm fastened radially to the rotating shaft.

For aid in understanding the composition and operation of the generator, see the following in-depth description referring to the attached drawings, where one possible form of construction is shown as one non-exclusive example of the generator design.

Figure 1 is a perspective view of a wind generator constructed following the invented design.

Figure 2 is a top view of the generator in figure 1.

Figure 3 is a front view of the generator, showing the composition and mounting of one of the pieces of mesh of which the sails are comprised.

Figure 4 is a front view similar to figure 3, showing the composition of one of the sails.

Figure 5 is a perspective view of a mechanism regulating the separation between the mesh-bearing and strip-bearing frameworks of each sail.

Figures 6 and 7 are top views of two variations of the mechanism regulating the separation between the mesh-bearing and strip-bearing frameworks of each sail.

Figure 8 is a perspective view of a wind generator variation constructed following the invented design.

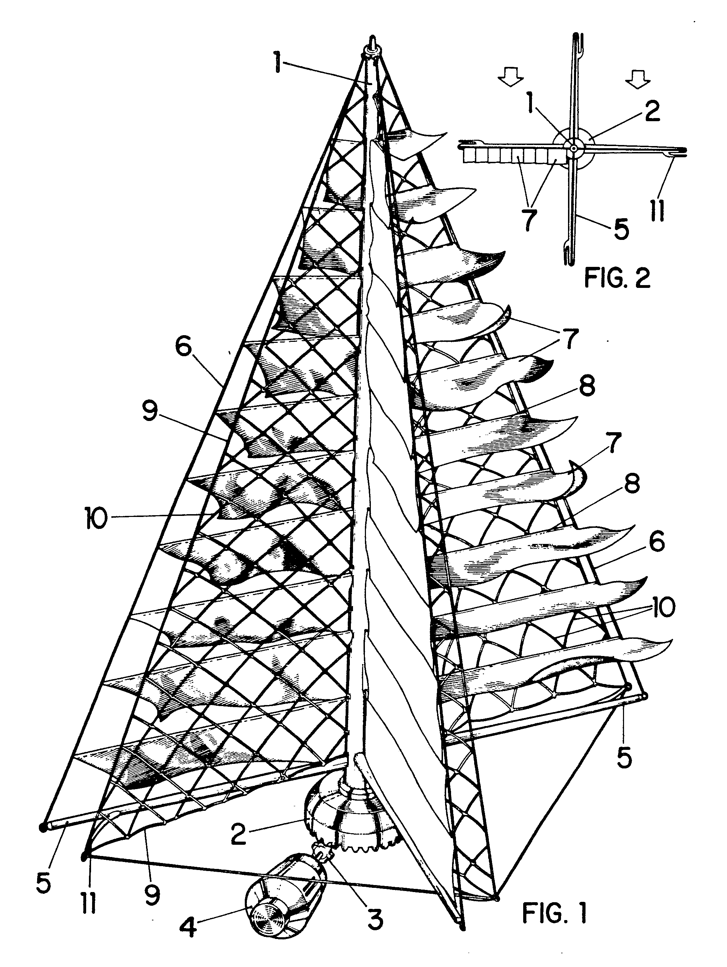

The generator shown in figures 1 and 2 is comprised of a rotating vertical shaft, indicated by the number 1, the lower portion of which ends in a gear ring, 2, which enmeshes with pinion 3, attached to the shaft of a motor, 4. Attached radially to rotating vertical shaft 1 are four rigid arms, indicated by the number 5, whose free end is attached to the top end of shaft 1 by tightened cables, 6. The arms (5) and cables (6) form flat, triangular frameworks on which flexible strips, 7, are mounted. Said strips, made, for example, of fabric, are attached to said framework along only one of their edges, preferibly the upper longitudinal edge, 8. Attachment may be by means of a rotating shaft. In the example described here, the strips (7) are trapezial, though they be shaped differently. The shape of the frameworks (6) may also vary.

Along vertical shaft 1 are also attached flat frameworks, 9, preferibly made of cables, which bear the mesh, 10.

Each sail is comprised of flat frameworks (6) bearing strips (7) and flat frameworks (9) bearing mesh (10). The two frameworks are located alongside or close to one another. In all sails, frameworks 6 and 9 occupy the same relative position, in such a way that in all sails the strips (7) are located on the same side of the sail with respect to the mesh (10).

The mesh (10) may be strung across the same framework on which the sails (7) are mounted.

In the generator arrangement shown in figure 1, mesh-bearing framework 9 and strip-bearing framework 6 are attached to one another by means of an elastic band or element, 11, which pulls framework 9 towards framework 6.

In this arrangement, when the wind strikes the generator on the mesh (10) side, the strips (7) rise, rotating along their upper, articulated edge, thus offering no resistance, and the generator does not move. However, when the wind strikes the strip (7) side, the strips lie against one another and press against the mesh (10), presenting a closed, continuous surface to the wind, whose action makes the apparatus turn. Should the wind striking the strips (7) be very strong, the pressure of the strips on the mesh (10) will force framework 9 to separate from framework 6, due to elastic element 11, allowing the strips (7) to rise partially or entirely and thus reducing or eliminating the surface resisting the wind action.

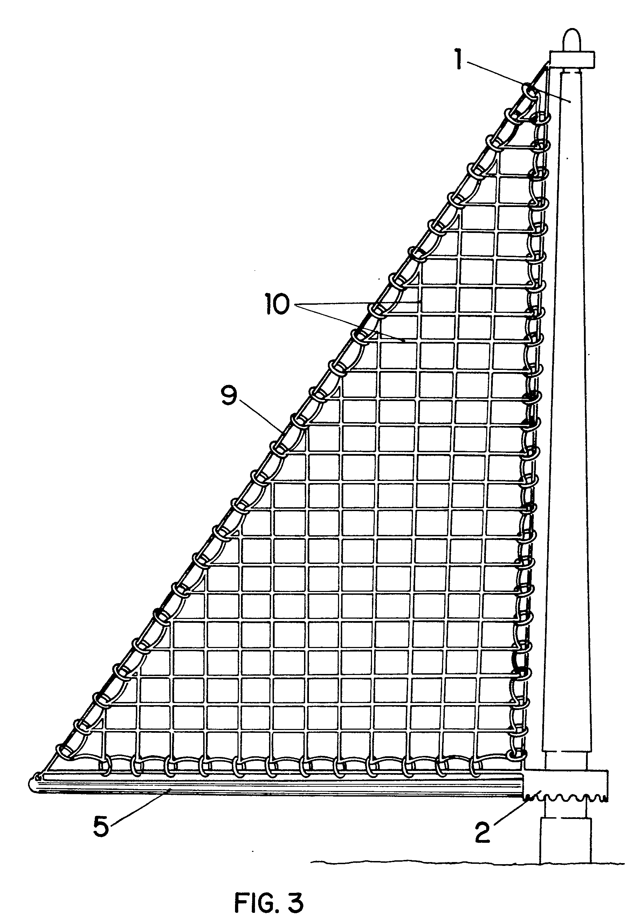

Figure 3 shows a piece of mesh (10) mounted on its framework (9), which may be the same as the fabric-bearing framework (6).

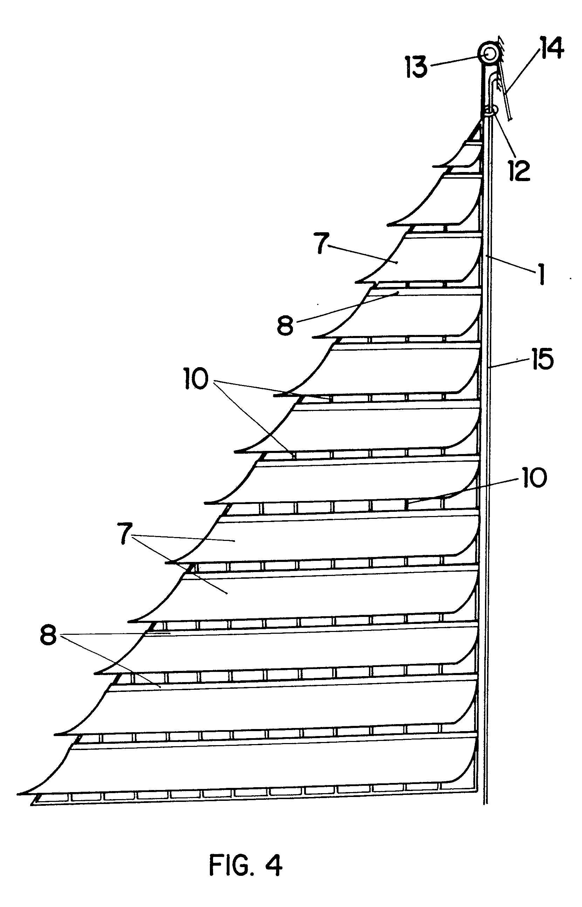

Figure 4 shows one example of framework 6, on which strips (7) are mounted. The upper edge of the strips may bear a small tube as their upper articulation shaft, 8. In the case of figure 4, the cables (6) and the framework bearing the strips are attached at the top to a ring, 12, which may be raised by means of pulley 13 and cable 14, pulling ring 12 along rotating shaft 1 or an auxiliary cable, 15.

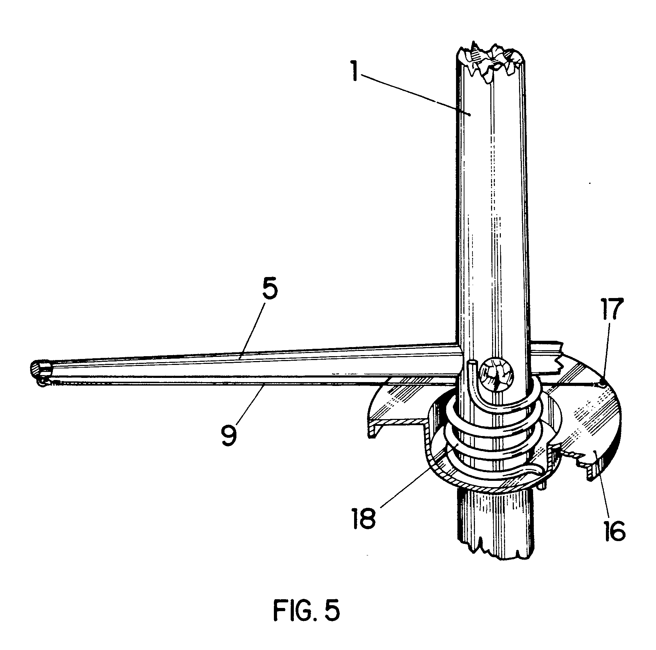

The mechanism shown in figure 5 is comprised of a disk, 16, which rotates when the strength or intensity of the wind increases excessively. Said rotation moves gripping point 17, which is the point where mesh-bearing framework 9 is fastened, and varies the angular separation between mesh-bearing framework 9 and arm 5, which forms part of the framework bearing the flexible strips. The rotation of the disk is controlled by spring 18.

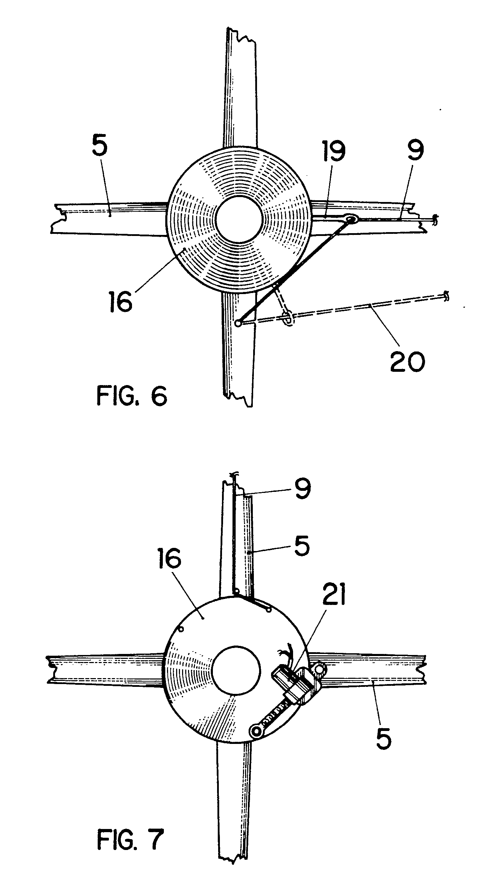

Figure 6 shows a variation of the mechanism described above, in which disk 16 includes an extensor, 19, which moves the lower cable of mesh framework 9 to the position indicated with the number 20 when the strength or intensity of the wind increases.

In the case of figure 7, the possible angular separation between the two frameworks of each sail is made by means of a motor, 21, which works when a sensor reads an excess in the strength or intensity of the wind striking the apparatus.

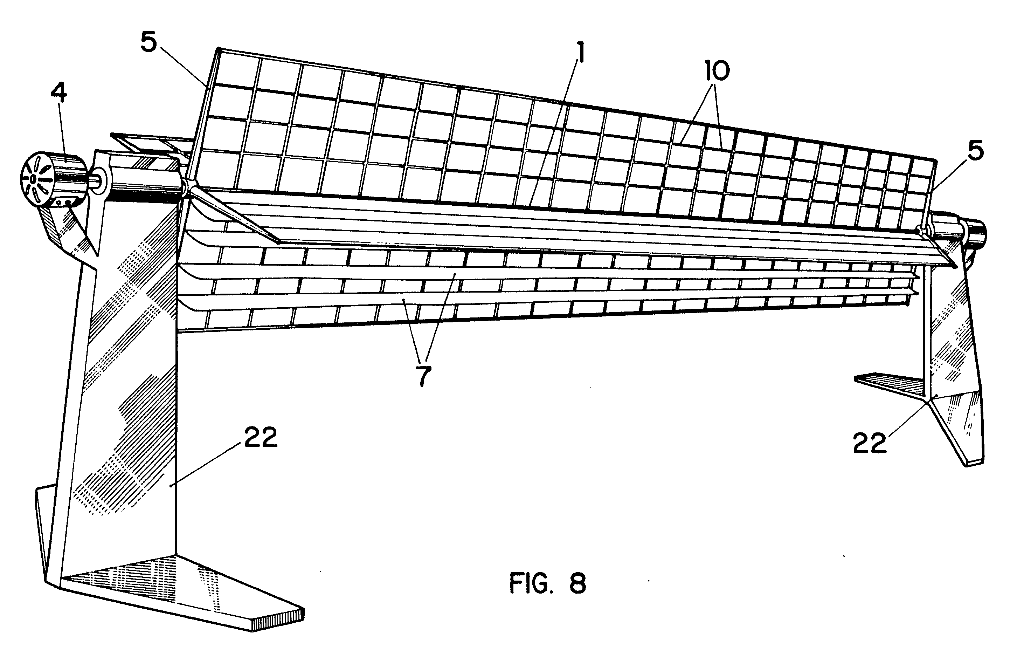

Lastly, figure 8 shows a generator constructed as described above, but in which rotating shaft 1 is horizontal and is mounted by means of bearings on lateral supports, 22. In this arrangement, the strips, 7, are rectangular, as is the mesh, 10. The strips (7) are mounted between rigid arms, 5, on the ends.

Some cables or guys may need to be.added to fix the upper end of the rigid vertical shaft to the ground.

Having described in sufficient detail the nature of the invention as well as the manner of putting it into practice, it must be stated herein that the arrangements indicated above and illustrated in the attached drawings are subject to detail modifications that will not alter the fundamental principle of the invention.

**Claims**

1. Wind generator wherein there is a rotating shaft along which are mounted two or more radial sails, each of which sails is comprised of a piece of supporting mesh and a series of flexible, self-orienting strips. At one end of said shaft is a geared ring that enmeshes with a power supply pinion. Each of the aforesaid pieces of mesh is mounted on a flat framework having the same shape as the sails. The flexible strips of each sail are mounted on a flat framework over which the strips are layered consecutively to cover the entire surface of the framework, to which the strips are attached by only one of their edges. The frameworks bearing the flexible strips are positioned closely alongside the frameworks bearing the mesh and are located on the same side of said mesh in each sail.

2. Generator as set forth in claim 1, wherein the frameworks bearing the flexible strips include at least one rigid arm attached radially to the rotating shaft.

3. Generator as set forth in claim 1, wherein the rotating shaft is vertical and is comprised of a rigid bar mounted on a bearing or lower support to which the mesh-bearing and flexible strip-bearing frameworks are attached radially.

4. Generator as set forth in claim 1, wherein the rotating shaft is horizontal and is comprised of a rigid bar both of whose ends are mounted on bearings or supports.

5. Generator as set forth in claims 3 and 4, wherein the rotating shaft is tubular and is mounted so as to rotate freely on a second, fixed, internal, coaxial shaft, and the mesh-bearing and strip-bearing frameworks are attached to said tubular shaft.

6. Generator as set forth in claims 3 and 4, wherein the shaft is comprised of a rigid, fixed bar on which are mounted rotating bearings or rings to which are attached the mesh-bearing and strip-bearing frameworks.

7. Generator as set forth in claim 1, wherein said mesh forms a reticulate surface comprised of shapes whose size is much smaller than the shape of the flexible strips.

8. Generator as set forth in claim 1, wherein in each sail the mesh-bearing framework can be moved at an angle to the strip-bearing framework and the two frameworks are attached by means of elastic or motorized elements that regulate the separation between said frameworks according to the strength or intensity of the wind.

9. Generator as set forth in the preceding claims, wherein the strips are quadrangular, preferibly rectangular or trapezial, and are attached to the framework along their upper horizontal or inclined edge.

10. Generator as set forth in the preceding claims, wherein the mesh is strung on the same framework as the flexible strips.

FIG. 2

FIG. 1

FIG. 3

FIG. 4

FIG. 5

FIG. 6

FIG. 7

FIG. 8

EP 0 331 601 A2